# EUROPÄISCHE PATENTSCHRIFT

(11) **EP 2 806 986 B1**
(45) Veröffentlichungstag und Bekanntmachung des Hinweises auf die Patenterteilung: **09.08.2017**
(21) Anmeldenummer: 12810130.0
(22) Anmeldetag: 03.12.2012
(51) Int. Cl.: B21C 47/24, B21J 15/04, B21J 15/10, F16B 5/04

(54) **VERFAHREN UND VORRICHTUNG ZUM VERBINDEN ZWEIER ENDEN METALLISCHER BÄNDER**
METHOD AND DEVICE FOR JOINING TWO METAL STRIP ENDS
PROCÉDÉ ET DISPOSITIF DESTINÉS À RELIER DEUX EXTRÉMITÉS DE BANDES MÉTALLIQUES

(30) Priorität: 25.01.2012 DE 102012100629
(43) Veröffentlichungstag der Anmeldung: 03.12.2014
(73) Patentinhaber: Otto Junker GmbH, 52152 Simmerath/Lammersdorf (DE)
(72) Erfinder: SCHMITZ, Klaus, 52152 Simmerath (DE); BRÜLL, Robert, 52156 Monschau-Konzen (DE); RÜTTGERS, Alexander, 52152 Simmerath-Rollesbroich (DE)
(74) Vertreter: Cohausz & Florack
(86) Internationale Anmeldenummer: PCT/EP2012/074222
(87) Internationale Veröffentlichungsnummer: WO 2013/110379

(56) Entgegenhaltungen:
- EP-A2- 0 029 415
- US-A- 585 835
- US-A- 3 276 112

## Beschreibung

Die Erfindung betrifft ein Verfahren und eine Vorrichtung
zum Verbinden der Enden von zwei- oder mehrflächig aufeinander liegenden metallischen Bahnen, insbesondere wickelfähiger Metallbänder, um diese nacheinander durch eine Behandlungs- oder Bearbeitungsanlage zu ziehen.

Wickelfähige Metallbahnen (Bänder oder Folien) werden in verschiedensten Prozessen zur Durchführung einer Behandlung oder Bearbeitung zunächst abgewickelt und anschließend wieder aufgewickelt. So zum Beispiel in Blechwalzwerken, in Glühöfen, in Entfettungslinien, in Reinigungslinien, in Beizlinien, in Beschichtungslinien, in Richtanlagen oder dergleichen. Die Bahnen werden in Form eines Wickels, eines sogenannten Coils angeliefert, im Eingangsbereich zum Durchlauf durch die Anlage abgewickelt und, nach ihrer Behandlung, am Ende der Anlage wieder zu einem Coil aufgewickelt.

Wenn der eingangsseitige Coil zu Ende geht, kommt es darauf an, dessen Ende mit dem Anfangsabschnitt eines frischen Coils zu verbinden, der dann von dem bereits in der Anlage noch durchgeschlauften Bandendes beim Weiterlauf durch die verschiedenen Bearbeitungsstellen in der Anlage mit durchgezogen wird. Da dies meist in einem kontinuierlichen Prozess abläuft, muss die Verbindung in möglichst kurzer Zeit hergestellt werden, da die Anlagen häufig nur mit einem relativ kleinen Bandspeicher versehen sind und ein Stillstand der Anlage vermieden werden soll.

Aus der EP 0 029 415 A2 ist es bekannt, Bahnenden formschlüssig miteinander zu verbinden, wobei mittels Stanzwerkzeugen im Überlappungsbereich eine Mehrzahl von kreuzförmigen Schnitten hergestellt werden und die so entstehenden Lappen zwischen zwei Kreuzschnitten zweilagig umbördelt werden. Die führt zu vierlagigen Verbindungsstellen und damit, insbesondere bei der Stanzung von Kreuzschnitten in mehreren parallelen Reihen, zu relativ steifen Bahnabschnitten, welche nicht ohne weiteres alle Anlagen passieren können.

Daher wurde auch bereits vorgeschlagen (DE 199 59 090 A1), die überlappenden Enden von zwei Metallbahnen mittels ringförmigen Schweißverbindungen mit Abstand zu den Bahnenden zu versehen. Hierbei fließt das Bandmaterial im Bereich der Löcher ineinander und erzeugt den nötigen Halt.

Eine weitere bekannte Vorrichtung (GB-PS 291 684) dient zum Verbinden von Enden dünner Folienbahnen, beispielsweise von Aluminium-Folie. Hierbei wurde im Überlappungsbereich der Bahnenden eine mit einer Vielzahl von Elektroden versehene Walze auf die Bahn abgesenkt, wobei die Elektroden im Bereich einer Gegenwalze mit entsprechenden Öffnungen die Bahn durchstoßen und mittels einer angelegten Spannung zwischen Elektroden und Bahn elektrisch miteinander verschweißen.

Ein gattungsgemäßes Verfahren bzw. entsprechende Vorrichtung zeigt die US 3 276 112 A. Dort ist ein Verfahren zum Verbinden der Enden von zwei - oder mehrflächig aufeinander liegenden Bahnen beschrieben, wobei die Bahnenden mittels einer Mehrzahl im Wesentlichen quer zur Bandrichtung angeordneter Verbindungselemente verbunden werden, wobei zunächst alle Löcher gleichzeitig in einem ersten Hub gestanzt und anschließend alle Verbindungselemente gleichzeitig in einem zweiten Hub verpresst werden. Die bekannte Vorrichtung weist dazu oberhalb der Werkzeuge eine Presseinrichtung mit einer Mehrzahl von Pressstempeln zur Betätigung der darunter befindlichen Werkzeuge auf.

Davon ausgehend liegt der Erfindung die Aufgabe zugrunde, die zuvor näher beschriebenen Verfahren und Vorrichtung zum zugfesten Verbinden vorzugsweise metallischer Bahnen so zu verbessern und auszugestalten, dass eine schnell durchzuführende und preiswerte Verbindung zwischen zwei einander überlappenden Endabschnitten von metallischen Bändern geschaffen wird, die hohen Zugbeanspruchungen, chemischen Angriffen insbesondere durch Lauge, Säure oder Lösungsmittel und hohen Temperaturen deutlich über 300°C, bis hin zu 1.100°C standhält. Gleichzeitig soll die Verbindungsstelle möglichst flach sein und keine scharfen Kanten aufweisen, um Führungselemente insbesondere Umlenkrollen in der Bearbeitungslinie nicht zu beschädigen. Darüber hinaus ist erwünscht, dass die Verbindung besonders auch für die Verbindung ungleicher Materialpaarungen und für die Verbindung prinzipiell sehr schlecht verformbarer Materialien, wie von walzharten Metallbändern, geeignet ist.

Hinsichtlich des Verfahrens nach dem Oberbegriff von Anspruch 1 besteht die Lösung der Aufgabe darin, dass die Metallbahnen walzharte Metallbahnen sind und dass die Verbindungselemente Ösen sind.

Vorrichtungsmäßig ist die Aufgabe dadurch gelöst, dass bei einer Vorrichtung mit den Merkmalen des Oberbegriffs von Anspruch 6 die Bearbeitungseinheit ein Arbeitswerkzeug mit einer Mehrzahl in einer Linie abwechselnd mit gleichem Abstand angeordneter Stanz- und Presswerkzeuge sowie eine Matrize als Gegenwerkzeug aufweist, dass das Werkzeug und die Matrize in Richtung der Linie um den Abstand zweier benachbarter Einzelwerkzeuge versetzbar sind.

Erfindungsgemäß werden ein Verfahren und eine Vorrichtung vorgeschlagen, bei denen die Bahnen im Überlappungsbereich zunächst in einem ersten Hub gelocht und anschließend in einem zweiten Hub mit speziellen Ösen in diesen Löchern verbunden werden. Dazu werden die beiden sich überlappenden Bahnenden zunächst mit Klemmvorrichtungen in ihrer Position fixiert und anschließend wird mit einem Hub gleichzeitig eine Mehrzahl in einer Reihe angeordneter Löcher in die überlappenden Bänder gestanzt. Mit einem zweiten Antrieb werden das Arbeitswerkzeug und eine entsprechende, unter dem Band vorgesehene Matrize so versetzt, dass beim nächsten Hub nicht die Lochwerkzeuge, sondern die Verbindungswerkzeuge zum Einsatz kommen, und zwar an exakt den gleichen Positionen, an denen zuvor die Löcher gestanzt wurden. Gleichzeitig zu dieser Versatzbewegung des Werkzeughalters werden die Ösen mittels einer Führungsschiene in den Arbeitsbereich der Verbindungseinrichtung eingeführt. Mit dem nun folgenden, zweiten Hub werden die Ösen in den Löchern verpresst und die Bänder somit verbunden.

Die Klemmvorrichtungen werden gelöst und das "frische" Band wird mit dem vorgehenden Band in die Bearbeitungsanlage eingezogen. Die Herstellung der oberhalb der Stanz- und Presswerkzeuge eine Presseinrichtung vorgesehen ist.

Erfindungsgemäß werden ein Verfahren und eine Vorrichtung vorgeschlagen, bei denen die Bahnen im Überlappungsbereich zunächst in einem ersten Hub gelocht und anschließend in einem zweiten Hub mit speziellen Ösen in diesen Löchern verbunden werden. Dazu werden die beiden sich überlappenden Bahnenden zunächst mit Klemmvorrichtungen in ihrer Position fixiert und anschließend wird mit einem Hub gleichzeitig eine Mehrzahl in einer Reihe angeordneter Löcher in die überlappenden Bänder gestanzt. Mit einem zweiten Antrieb werden das Arbeitswerkzeug und eine entsprechende, unter dem Band vorgesehene Matrize so versetzt, dass beim nächsten Hub nicht die Lochwerkzeuge, sondern die Verbindungswerkzeuge zum Einsatz kommen, und zwar an exakt den gleichen Positionen, an denen zuvor die Löcher gestanzt wurden. Gleichzeitig zu dieser Versatzbewegung des Werkzeughalters werden die Ösen mittels einer Führungsschiene in den Arbeitsbereich der Verbindungseinrichtung eingeführt. Mit dem nun folgenden, zweiten Hub werden die Ösen in den Löchern verpresst und die Bänder somit verbunden.

Die Klemmvorrichtungen werden gelöst und das "frische" Band wird mit dem vorgehenden Band in die Bearbeitungsanlage eingezogen. Die Herstellung der Verbindung kann auch bei laufendem Betrieb stattfinden. Dazu weisen die Anlagen im Eingangsbereich einen Bandspeicher auf, der die Zuführung des Bandes in die Bearbeitungsanlage sicherstellt, während das Bandende kurzzeitig angehalten wird.

Nach einer weiteren Lehre der Erfindung ist vorgesehen, dass das Stanzen und Verpressen der Ösen durch abwechselndes Betätigen von in einer Linie abwechselnd angeordneten Stanz- und Presswerkzeugen erfolgt und dass das dazu verwendete Arbeitswerkzeug zum Wechsel zwischen Stanzen und Verpressen der Ösen in seiner Längsrichtung horizontal versetzt wird. Auf diese Weise kann der Verbindungsvorgang relativ schnell und nur mittels der Bewegung relativ geringer Massen erfolgen. Bevorzugt werden die beiden Hubfunktionen (Stanzen und Verpressen) von einem einzigen gemeinsamen Antrieb übernommen. Dadurch wird der konstruktive Aufwand der erfindungsgemäßen Vorrichtung verringert.

Nach einer anderen Weiterbildung der Erfindung ist vorgesehen, dass die Ösen den Presswerkzeugen während des Stanzvorganges zugeführt werden. Dabei wird der Umstand ausgenutzt, dass durch die abwechselnden Hübe sich die Presswerkzeuge während des Stanzvorganges in Ruhestellung befinden, so dass hier gleichzeitig die Zuführung der Ösen erfolgen kann.

Gemäß einer weiteren Lehre der Erfindung verläuft die Anordnung der Ösen senkrecht zur Bandrichtung. Es ist jedoch alternativ auch möglich, dass die Anordnung der Ösen schräg zur Bandrichtung verläuft, wobei der Winkel der in Linie angeordneten Ösen frei gewählt werden kann. Dies ist beispielsweise dann zweckmäßig, wenn unterschiedliche Bandbreiten verarbeitet werden sollen, damit die Ösen stets gleichmäßig über die Bandbreite verteilt angeordnet werden können. Des Weiteren kann einer schräge Anordnung der Ösen dann von Vorteil sein, wenn gewünscht ist, dass nicht alle Ösen gleichzeitig über empfindliche Umlenkungen in der Anlage geführt werden sollen. Außerdem lässt sich auf diese Weise die Anzahl der Ösen in einem Band erhöhen, ohne dass der Abstand der Ösen verändert werden müsste. Auch dies bedeutet eine Verringerung des konstruktiven Aufwandes.

Gemäß einer weiteren Ausgestaltung der Erfindung ist ein gemeinsamer Antrieb für beide Hubfunktionen vorgesehen und zum Wechsel zwischen Stanzen und Verpressen der Ösen das Arbeitswerkzeug in seiner Längsrichtung verschiebbar ausgebildet. Dazu ist bevorzugt die Presseinrichtung als gemeinsam auf alle im Einsatz befindlichen Stanz- und Presswerkzeuge wirkender Pressbalken ausgebildet. Zur weiteren Verminderung des konstruktiven Aufwandes ist vorgesehen, dass der Pressbalken eine der Anzahl der Stanz- bzw. Presswerkzeuge entsprechende Anzahl von Presstempeln aufweist, von denen jeweils durch das Versetzen des Arbeitswerkzeuges nur die Stanzwerkzeuge oder die Presswerkzeuge betätigt werden.

Eine weitere Lehre der Erfindung sieht vor, dass die unterhalb der Stanz- und Presswerkzeuge angeordnete Matrize mit entsprechend der Stanz- bzw. Presswerkzeuge abwechselnd angeordneten Löchern bzw. Pressformen zum Verformen der Ösen versehen ist.

Schließlich ist nach einer weiteren Ausgestaltung der Erfindung vorgesehen, dass zur Zuführung der Ösen in die jeweiligen Pressbereiche eine Zufuhreinrichtung vorgesehen ist, welche beispielsweise als Zufuhrschiene oder Zufuhrbalken ausgebildet sein kann.

Die Erfindung wird nachfolgend anhand einer lediglich ein bevorzugtes Ausführungsbeispiel darstellenden Zeichnung näher erläutert. In der Zeichnung zeigen
- Fig. 1: eine erfindungsgemäße Vorrichtung zum Verbinden zweier Bahnenden, schematisch in Seitenansicht in Richtung der Längsachse der Bänder,
- Fig. 2A und 2B: das Arbeitswerkzeug der Vorrichtung aus Fig. 1 in Stanzstellung (erster Hub) bzw. Pressstellung (zweiter Hub),
- Fig. 3: eine erste mit der erfindungsgemäßen Vorrichtung hergestellte Bandverbindung und
- Fig. 4: eine andere mit der erfindungsgemäßen Vorrichtung hergestellte Bandverbindung.

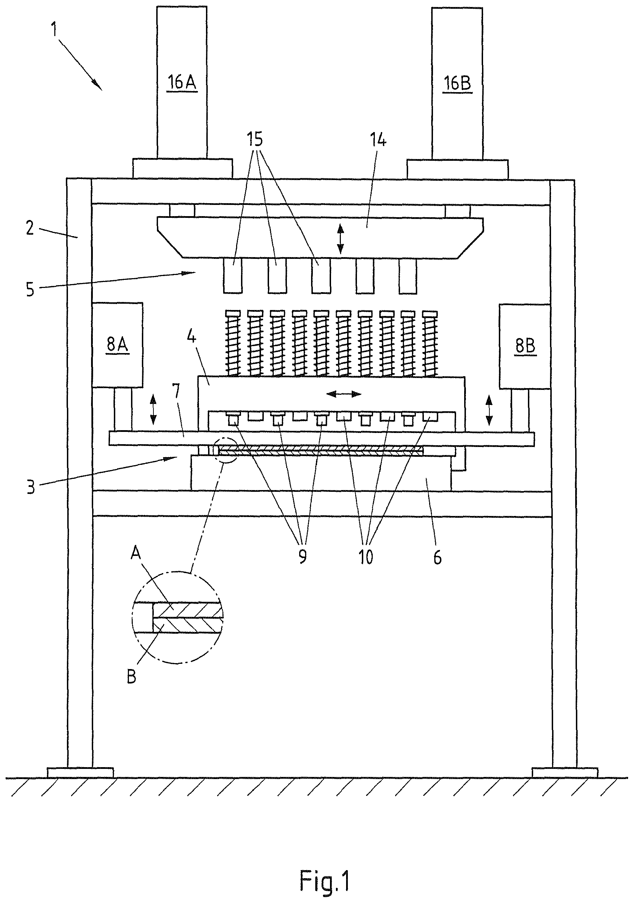

In Fig. 1 ist schematisch eine erfindungsgemäße Vorrichtung 1 zum Verbinden der Enden von zwei- oder mehrflächig in einer horizontalen Ebene übereinander liegenden Bahnen A und B, insbesondere mittelflächiger Metallbänder dargestellt. Die Vorrichtung 1 weist dazu zunächst einen Rahmen 2 auf, an der die einzelnen Aggregate befestigt sind.

Zum Fixieren der Bahnenden A und B dient eine Klemmvorrichtung 3, welche bevorzugt beidseits des Bereichs der anzubringenden Ösen angeordnet ist. Dahinter befindet sich ein Arbeitswerkzeug 4 und über diesem eine Presseinrichtung 5. Die Klemmvorrichtung 3 weist dabei zunächst einen festgelegten Stützblock 6 auf, auf dem die Enden der Bänder A und B abgelegt werden. Ein Klemmbalken 7, welcher durch entsprechende Antriebe 8A und 8B vertikal verfahrbar ist, sorgt für den nötigen Anpressdruck der Bandenden und lässt unterschiedlichste Banddicken zu.

Das Arbeitswerkzeug 4 weist im dargestellten und insofern bevorzugten Ausführungsbeispiel jeweils fünf Stanzwerkzeuge 9 und fünf Presswerkzeuge 10 auf, welche abwechselnd in einer Reihe hintereinander angeordnet sind. Das Arbeitswerkzeug 4 ist von einem nicht dargestellten Antrieb in horizontaler Richtung quer zur Bandlängsachse verfahrbar, wie durch den Doppelpfeil dargestellt.

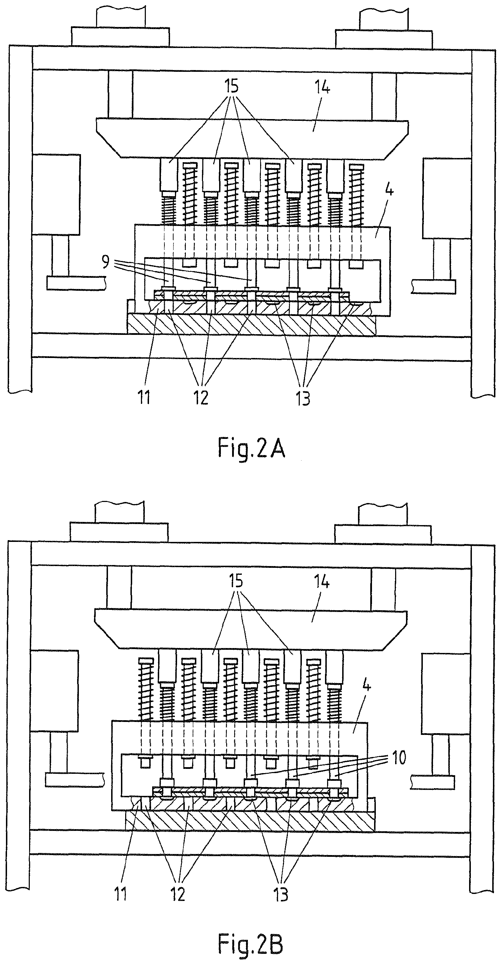

Da in Fig. 1 die Klemmvorrichtung 3 den Blick auf das Arbeitswerkzeug 4 versperrt, ist das Arbeitswerkzeug 4 in den Fig. 2A und 2B freigelegt dargestellt. Hier erkennt man zunächst, dass unterhalb des Arbeitswerkzeuges 4 eine mit diesem verbundene Matrize 11 angeordnet ist, welche mit entsprechend der Stanz- bzw. Presswerkzeuge 9, 10 abwechselnd angeordneten Löchern 12 bzw. Pressformen 13 zum Verformen der Ösen versehen ist.

Aus Fig. 1 geht ferner hervor, dass die Presseinrichtung 5 zunächst einen horizontalen Pressbalken 14 oberhalb des Arbeitswerkzeuges 4 aufweist, an dem fünf nach unten ragende Pressstempel 15 versehen sind, deren Abstand so gewählt ist, dass er je nach Stellung des Arbeitswerkzeuges 4 mit den Stanzwerkzeugen 9 oder den Presswerkzeugen 10 korrespondiert. Der Pressbalken 14 ist dabei zur Aufbringung des nötigen Pressdruckes vertikal verfahrbar und wird von zwei bevorzugt als Zylinder-Kolben-Einrichtungen ausgebildeten Antrieben 16A und 16B mit Kraft beaufschlagt.

Erfindungsgemäß soll nun in zwei Hüben mit einer einzigen Presseinrichtung 5 in einem ersten Schritt eine Mehrzahl von Löchern in die Enden der Bänder A und B gestanzt werden (Fig. 2A) und in einem zweiten Schritt in den gestanzten Löchern Ösen zur Verbindung der Bandenden eingepresst werden (Fig. 2B). Zur besseren Darstellung ist die Matrize 11 in den Fig. 2A und 2B aufgebrochen geschnitten dargestellt. Hierbei erkennt man deutlich die unterhalb der Stanzwerkzeuge 9 vorgesehen Löcher 12 im dargestellten Ausführungsbeispiel bei nach rechts verfahrenem Arbeitswerkzeug 4. Das Verpressen ist in Fig. 2B dargestellt, dort sind unterhalb der Presswerkzeuge 15 bei nach links verfahrenem Arbeitswerkzeug 4 entsprechende Pressformen 13 angeordnet, welche gemeinsam mit den korrespondierenden Pressformen der Presswerkzeuge 10 die Verformung der Ösen vornehmen.

Aus den Fig. 1 und 2 geht ferner hervor, dass die einzelnen Stanzwerkzeuge 9 bzw. Presswerkzeuge 10 vertikal beweglich im Arbeitswerkzeug 4 angeordnet ist, wobei jeweils eine nicht näher bezeichnete Feder dafür sorgt, dass die Werkzeuge nach dem Bearbeitungsvorgang von ihrer Bearbeitungsstellung in ihre Ruhestellung zurück bewegt werden. Diese Darstellung dient nur der Veranschaulichung, in der Praxis können für die Rückbewegung der Werkzeuge auch aktive Unterstützungsmaßnahmen vorgesehen sein.

Man erkennt deutlich, dass durch die erfindungsgemäße Vorrichtung 1 eine relativ schnell vonstatten gehende Verbindung der Enden zweier Bänder A und B erfolgen kann, ohne dass hierzu große Massen bewegt werden müssten. Zwischen den einzelnen Hüben muss lediglich das Arbeitswerkzeug 4 horizontal um den Abstand zweier Werkzeuge verfahren werden, um dann, wie beim ersten Hub, von der Presseinrichtung 5 betätigt werden zu können.

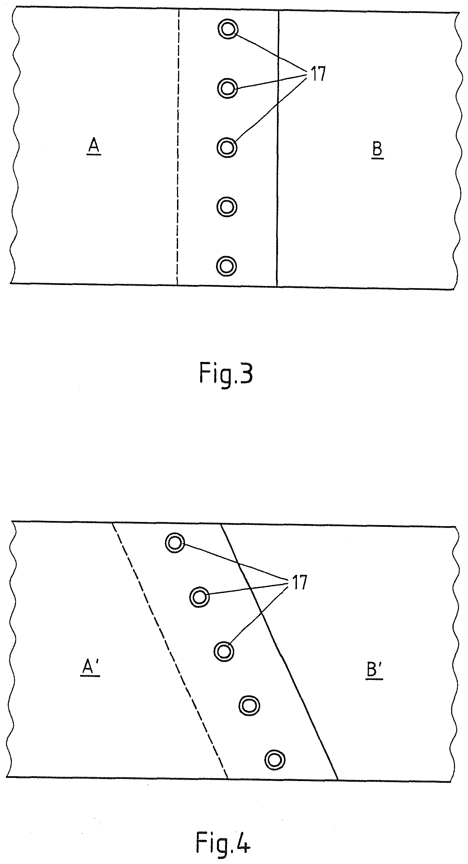

Schließlich sind in den Fig. 3 und 4 noch die von der erfindungsgemäßen Vorrichtung erzeugten Bandverbindungen dargestellt. Dabei verläuft die Anordnung der mit dem Bezugszeichen 17 bezeichneten fertigen Ösen gemäß Fig. 3 senkrecht zur Bandrichtung. Der hinsichtlich einer Verwendung mit unterschiedlichsten Bandbreiten auf den ersten Blick vermeintlich bestehende Nachteil des festen Abstandes zwischen Stanzwerkzeugen 9 und Presswerkzeugen 10 wird dadurch behoben, dass wenigstens die Klemmvorrichtung 3, das Arbeitswerkzeug 4 und die Presseinrichtung 5 um eine vertikale Achse verdreht werden können. Wenn die Bandbreite so klein ist, dass nur 3 oder 4 der gezeigten fünf Ösen 17 bei einer senkrechten Anordnung zum Eingriff kommen, ist dies kein Problem, da die über die Seitenränder des Bandes vorstehenden Werkzeuge ins Leere arbeiten. Variiert die Bandbreite jedoch in einem Bereich, in dem eine Öse zu nahe an den Rand der Bandenden oder gar auf den Rand projiziert würde, so ist durch die Verschwenkung der Werkzeuge oder bevorzugt des gesamten Rahmens 2 um eine vertikale Achse eine stufenlose Verstellung möglich, wie in Fig. 4 bei den schmaleren Bändern A' und B' gezeigt. Aus diesem Grunde eignet sich die erfindungsgemäße Vorrichtung nicht nur für Bänder beliebiger Bandstärken sondern auch beliebiger Bandbreiten.

## Patentansprüche

1. Verfahren zum Verbinden der Enden von zwei- oder mehrflächig aufeinander liegenden, wickelfähigen, Metallbahnen, um diese nacheinander durch eine Behandlungs- oder Bearbeitungsanlage zu ziehen, wobei die Bahnenden mittels einer Mehrzahl im Wesentlichen quer zur Bandrichtung angeordneter Verbindungselemente verbunden werden, wobei zunächst alle Löcher gleichzeitig in einem ersten Hub gestanzt und anschließend alle Verbindungselemente gleichzeitig in einem zweiten Hub verpresst werden,
**dadurch gekennzeichnet, dass**
die Metallbahnen walzharte Metallbahnen sind und dass die Verbindungselemente Ösen sind.

2. Verfahren nach Anspruch 1,
**dadurch gekennzeichnet, dass**
das Stanzen und Verpressen der Ösen durch abwechselndes Betätigen von in einer Linie abwechselnd angeordneten Stanz- und Presswerkzeugen erfolgt und dass das dazu verwendete Arbeitswerkzeug zum Wechsel zwischen Stanzen und Verpressen der Ösen in seiner Längsrichtung horizontal versetzt wird.

3. Verfahren nach Anspruch 1 oder 2,
**dadurch gekennzeichnet, dass**
die Ösen den Presswerkzeugen während des Stanzvorganges zugeführt werden.

4. Verfahren nach einem der Ansprüche 1 bis 3,
**dadurch gekennzeichnet, dass**
die Anordnung der Ösen senkrecht zur Bandrichtung verläuft.

5. Verfahren nach einem der Ansprüche 1 bis 3,
**dadurch gekennzeichnet, dass**
die Anordnung der Ösen in einem Winkel zur Bandrichtung verläuft.

6. Vorrichtung (1) zum Verbinden der Enden von zwei- oder mehrflächig aufeinander liegenden, wickelfähigen Metallbahnen (A, B), mit wenigstens einer Klemmvorrichtung (3) zum Festlegen der Bandenden und wenigstens einer Bearbeitungseinheit zum Verbinden der Bahnenden, wobei oberhalb der Werkzeuge eine Presseinrichtung (5) zur Betätigung der darunter befindlichen Werkzeuge vorgesehen ist, und wobei die Bearbeitungseinheit ein Arbeitswerkzeug (4) mit einer Mehrzahl in einer Linie abwechselnd mit gleichem Abstand angeordneter Stanz- und Presswerkzeuge (9,10) zum Einbringen von Verbindungselementen sowie eine Matrize (11) als Gegenwerkzeug aufweist,
**dadurch gekennzeichnet, dass**
- die Presswerkzeuge (9, 10) zum Einbringen von Ösen (17) in walzharte Metallbahnen geeignet sind;
- Mittel zum Versetzen des Arbeitswerkzeugs (4) und der Matrize (11) in Richtung der Linie um den Abstand zweier benachbarter Einzelwerkzeuge vorgesehen sind, und
- Mittel zum abwechselnden Betätigen der in der Linie abwechselnd angeordneten Stand- und Presswerkzeuge (9, 10) vorgesehen sind, so dass zunächst alle Löcher gleichzeitig in einem ersten Hub gestanzt und anschließend alle Ösen (17) gleichzeitig in einem zweiten Hub verpresst werden können.

7. Vorrichtung nach Anspruch 6,
**dadurch gekennzeichnet, dass**
ein gemeinsamer Antrieb (16A, 16B) für beide Hubfunktionen vorgesehen ist und dass zum Wechsel zwischen Stanzen und Verpressen der Ösen (17) das Arbeitswerkzeug (4) in Längsrichtung verschiebbar ausgebildet ist.

8. Vorrichtung nach Anspruch 6 oder 7,
**dadurch gekennzeichnet, dass**
die Presseinrichtung (5) einen gemeinsam auf alle im Einsatz befindlichen Stanz-und Presswerkzeuge (9,10) wirkenden Pressbalken (11) aufweist.

9. Vorrichtung nach Anspruch 8,
**dadurch gekennzeichnet, dass**
der Pressbalken (14) eine der Anzahl der Stanz- bzw. Presswerkzeuge (9, 10) entsprechende Anzahl von Pressstempeln (15) aufweist.

10. Vorrichtung nach einem der Ansprüche 6 bis 9,
**dadurch gekennzeichnet, dass**
wenigstens die Klemmvorrichtung (3), das Arbeitswerkzeug (4) und die Presseinrichtung (5) um eine vertikale Achse schwenkbar sind.

11. Vorrichtung nach einem der Ansprüche 7 bis 10,
**dadurch gekennzeichnet, dass**
die unterhalb der Stanz- und Presswerkzeuge (9,10) angeordnete Matrize (11) mit entsprechend der Stanz- bzw. Presswerkzeuge (9,10) abwechselnd angeordneten Löchern (12) bzw. Pressformen (13) zum Verformen der Ösen (17) versehen ist.

12. Vorrichtung nach einem der Ansprüche 7 bis 11,
**dadurch gekennzeichnet, dass**
zur Zuführung der Ösen in die jeweiligen Pressbereiche eine Zufuhreinrichtung vorgesehen ist.

## Claims

1. Method for joining the ends of two or more coilable metal strips arranged flat on top of one another, in order to draw these successively through a treatment or machining system, wherein the strip ends are joined together by a plurality of connecting elements arranged transversely to the direction of the strip, wherein initially all holes are punched simultaneously in a first stroke and subsequently all connecting elements are pressed simultaneously in a second stroke,
**characterised in that**
the metal strips are as-rolled metal strips and the connecting elements are eyelets.

2. Method according to claim 1,
**characterised in that**
the punching and pressing of the eyelets takes place by the alternate operation of punching and pressing tools arranged alternately in a line and **in that** the work tool used for this is displaced horizontally in its longitudinal direction for changing between punching and pressing of the eyelets.

3. Method according to claim 1 or 2,
**characterised in that**
the eyelets are fed to the pressing tools during the punching process.

4. Method according to any one of claims 1 to 3,
**characterised in that**
the arrangement of the eyelets extends perpendicularly to the strip direction.

5. Method according to any one of claims 1 to 3,
**characterised in that**
the arrangement of the eyelets extends at an angle to the strip direction.

6. Device (1) for joining the ends of two or more coilable metal strips (A, B) arranged flat on top of one another, comprising at least one clamping device (3) for fixing the strip ends and at least one machining unit for joining the strip ends, wherein above the tools a pressing device (5) is provided for actuating the tools located beneath it, and wherein the machining unit comprises a work tool (4) with a plurality of punching and pressing tools (9,10) arranged alternately in a line with the same spacing for the inserting of connecting elements as well as a die (11) as the counter-tool,
**characterised in that**
- the pressing tools (9,10) are suitable for inserting eyelets (17) in as-rolled metal strips;
- means are provided for moving the work tool (4) and the die (11) in the direction of the line by the distance between two adjacent individual tools, and
- means are provided for the alternate actuating of the punching and pressing tools (9,10) arranged alternately in the line, so that first all holes can be punched simultaneously in a fist stroke and next all eyelets (17) pressed simultaneously in a second stroke.

7. Device according to claim 6,
**characterised in that**
a common drive (16A, 16B) is provided for both stroke functions and **in that** for changing between punching and pressing of the eyelets (17) the work tool (4) is designed to be displaceable in the longitudinal direction.

8. Device according to claim 6 or 7,
**characterised in that**
the pressing device (5) comprises a pressure bar (11) which acts jointly on all punching and pressing tools (9, 10) in use.

9. Device according to claim 8,
**characterised in that**
the pressure bar (14) has a number of pressure rams (15) corresponding to the number of punching and pressing tools (9, 10).

10. Device according to any one of claims 6 to 9,
**characterised in that**
at least the clamping device (3), the work tool (4) and the pressing device (5) can be tilted around a vertical axis.

11. Device according to any one of claims 7 to 10,
**characterised in that**
the die (11) arranged underneath the punching and pressing tools (9, 10) is provided with alternately arranged holes (12) and moulds (13), respectively, corresponding to the punching and pressing tools (9, 10), respectively, for deforming the eyelets (17).

12. Device according to any one of claims 7 to 11,
**characterised in that**
for feeding the eyelets into the respective press areas a feeding device is provided.

## Revendications

1. Procédé pour joindre les extrémités de bandes métalliques à deux ou plusieurs faces, posées l'une sur l'autre et pouvant être enroulées, pour extraire lesdites bandes métalliques les unes après les autres en passant par une installation de traitement ou d'usinage, où les extrémités des bandes sont jointes au moyen d'une pluralité d'éléments d'assemblage disposés pratiquement de façon transversale par rapport à la direction des bandes, où tous les trous sont en premier lieu poinçonnés en même temps lors d'une première course et, ensuite, tous les éléments d'assemblage sont comprimés en même temps lors d'une deuxième course,
**caractérisé en ce que** les bandes métalliques sont des bandes métalliques durcies par laminage, et **en ce que** les éléments d'assemblage sont des oeillets.

2. Procédé selon la revendication 1,
**caractérisé**
**en ce que** le poinçonnage et la compression des oeillets se produisent en actionnant, de manière alternée, des outils de poinçonnage et de compression disposés en étant alternés sur une ligne, et en ce que l'outil de travail à utiliser permettant de passer du poinçonnage à la compression des oeillets est décalé horizontalement dans sa direction longitudinale.

3. Procédé selon la revendication 1 ou 2,
**caractérisé**
**en ce que** les oeillets sont fournis aux outils de compression au cours du processus de poinçonnage.

4. Procédé selon l'une quelconque des revendications 1 à 3,
**caractérisé**
**en ce que** l'agencement des oeillets se produit de manière perpendiculaire à la direction des bandes.

5. Procédé selon l'une quelconque des revendications 1 à 3,
**caractérisé**
**en ce que** l'agencement des oeillets se produit suivant un angle formé par rapport à la direction des bandes.

6. Dispositif (1) servant à joindre les extrémités de bandes métalliques (A, B) à deux ou plusieurs faces, posées l'une sur l'autre et pouvant être enroulées, ledit dispositif comprenant au moins un dispositif de serrage (3) servant à fixer les extrémités des bandes, et au moins un ensemble d'usinage servant à joindre les extrémités des bandes, où il est prévu, au-dessus des outils, un dispositif de compression (5) servant à actionner les outils se trouvant sous ledit dispositif de compression, et où l'ensemble d'usinage présente un outil de travail (4) comportant une pluralité d'outils de poinçonnage et de compression (9, 10) disposés en étant alternés sur une ligne et en ayant la même distance entre eux, lesdits outils de poinçonnage et de compression servant à introduire des éléments d'assemblage, ledit ensemble d'usinage présentant aussi une matrice (11) servant de contre-outil,
**caractérisé,**
- **en ce que** les outils de compression (9, 10) sont appropriés pour l'introduction d'oeillets (17) dans des bandes métalliques durcies par laminage ;
- **en ce qu'**il est prévu des moyens servant à décaler l'outil de travail (4) et la matrice (11) en direction de la ligne formée autour de la distance comprise entre deux outils individuels voisins, et
- **en ce qu'**il est prévu des moyens servant à l'actionnement, de manière alternée, des outils de poinçonnage et de compression (9,10) disposés en étant alternés sur la ligne, de sorte que tous les trous peuvent en premier lieu être poinçonnés en même temps lors d'une première course, tous les oeillets (17) pouvant ensuite être comprimés en même temps, lors d'une deuxième course.

7. Dispositif selon la revendication 6,
**caractérisé**
**en ce qu'**il est prévu un mécanisme de commande commun (16A, 16B) pour les deux fonctions de course, et en ce que, pour passer du poinçonnage à la compression des oeillets (17), l'outil de travail (4) est configuré en pouvant être déplacé dans la direction longitudinale.

8. Dispositif selon la revendication 6 ou 7,
**caractérisé**
**en ce que** le dispositif de compression (5) présente un sommier de pression (14) agissant de façon commune sur tous les outils de poinçonnage et de compression (9, 10) en cours d'utilisation.

9. Dispositif selon la revendication 8,
**caractérisé**
**en ce que** le sommier de pression (14) présente un nombre de pistons de presse (15) correspondant au nombre des outils de poinçonnage ou de compression (9, 10).

10. Dispositif selon l'une quelconque des revendications 6 à 9,
**caractérisé**
**en ce qu'**au moins le dispositif de serrage (3), l'outil de travail (4) et le dispositif de compression (5) peuvent pivoter autour d'un axe vertical.

11. Dispositif selon l'une quelconque des revendications 7 à 10,
**caractérisé**
**en ce que** la matrice (11) disposée au-dessous des outils de poinçonnage et de compression (9, 10) est dotée de trous (12) ou de moules de compression (13) servant au formage des oeillets (17), lesdits trous ou moules de compression étant disposés de manière alternée, en correspondant aux outils de poinçonnage ou de compression (9,10).

12. Dispositif selon l'une quelconque des revendications 7 à 11,
**caractérisé**
**en ce qu'**il est prévu un dispositif d'alimentation servant à l'alimentation des oeillets dans les zones de compression respectives.
